Europäisches Patentamt

European Patent Office

Office européen des brevets

(19)

(11) Veröffentlichungsnummer: **0 034 645**
**B1**

(12) **EUROPÄISCHE PATENTSCHRIFT**

(45) Veröffentlichungstag der Patentschrift:
12.09.84

(51) Int. Cl.³: **B 01 D 46/04**

(21) Anmeldenummer: 80103529.6

(22) Anmeldetag: 24.06.80

(54) Zwei-Stufen-Injektor zur Abgasreinigung von Staubfiltern.

| | |
|---|---|
| (30) Priorität: 07.02.80 DE 3004453 | (73) Patentinhaber: **Intensiv-Filter GmbH & Co KG., Vosskuhlstrasse 63, D-5620 Velbert 11 (DE)** |
| (43) Veröffentlichungstag der Anmeldung:<br>02.09.81 Patentblatt 81/35 | (72) Erfinder: **Meyer zu Riemsloh, Heinz, Dr.-Ing., Weissdornweg 4, D-4370 Marl (DE)** |
| (45) Bekanntmachung des Hinweises auf die Patenterteilung:<br>12.09.84 Patentblatt 84/37 | (74) Vertreter: **Geiersbach, Walter, Dipl.-Ing., Wickrather Strasse 43, D-4000 Düsseldorf 11 (DE)** |
| (84) Benannte Vertragsstaaten:<br>**AT BE CH FR GB IT LI NL SE** | |

(56) Entgegenhaltungen:
**DE - A - 1 407 922**
**DE - A - 2 003 908**
**DE - A - 2 031 011**
**DE - A - 2 332 031**
**DE - C - 1 228 130**
**US - A - 3 874 857**

**AUFBEREITUNGS-TECHNIK, Nr. 5, 1975 H. MEYER ZU RIEMSLOH et al. "Beschreibung und Beurteilung mechanisch und mittels Druckluft abgereinigter Schlauchfiltersysteme" Seiten 245 bis 254**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

### Beschreibung

Die Erfindung betrifft eine Reinigungsvorrichtung mit Rückspüleinrichtung für Gasfilterelemente von Staubgasfiltern, wie Filterschläuche, Filtertaschen oder Filterzellen, bei der Filterelementen zum Abreinigen mit Hilfe von Spülgasstössen, die in das Filterelement im Gegenstrom eingeblasen werden, zweistufige Injektoren zum Ansaugen von Reingas in zwei Stufen zugeordnet sind, von denen die eine als Coanda-Ringspaltinjektor und die andere als Einlaufdüse ausgebildet ist.

Es ist eine Vorrichtung zum Reinigen von Staubabscheidefiltern bekannt, die aus folgenden Teilen besteht: einem Filtergehäuse mit Eintritt und Austritt, Filterelementen, die mittels je eines rohrförmigen Elementenaustrittes mit dem Austritt des Filtergehäuses verbunden sind, einem kontinuierlich umlaufenden Glied und einer Anzahl an eine Druckluftquelle angeschlossene und gegen die Elementenaustritte gerichtete Düsen (DE-A-2 031 011).

Die Düsen bestehen aus Ejektoren, die einen in der beabsichtigten Strömungsrichtung gegen die Elementenaustritte gerichteten, ringförmigen Spalt aufweisen. Der Spalt lässt die Druckluft am Umfang eines durchgehenden, an beiden Enden offenen Kanals im Ejektor ausströmen. Dabei sind die Ejektoren mittels einer Steuervorrichtung an die Druckluftquelle derart angeschlossen, dass jeder Ejektor beim Vorbeilauf am betreffenden Elementenaustritt einen momentanen Druckluftstoss abgibt.

Im Filtergehäuse ist eine Anzahl, nämlich vier, konzentrisch um die Mittelachse angeordnete Reihen Filterelemente vorgesehen. Die gleiche Anzahl, also wiederum vier, Ejektoren ist im Karussell angeordnet. Es sind vier Ejektoren zweiundvierzig Filterelemente zugeordnet.

Die Austrittsenden der Ejektoren haben einen wesentlich geringeren Querschnitt als die Elementenaustritte und sind in einigem Abstand von ihnen vorgesehen. Dadurch reisst das Druckmittel weiteres filtriertes Gas aus der Sammelkammer mit. Im Austrittsrohr ist ein kegelförmiger Einsatz angebracht, der sich in Strömungsrichtung des Ejektors verjüngt. Dieser kegelförmige Einsatz verhindert ein Rückströmen der Reinigungsluft, ohne das normale Einströmen der Reinigungsluft in den Schlauch zu stören. Ausserdem soll der kegelförmige Einsatz dazu beitragen, den Druck im Schlauch zu steigern, sowie die Reinigungswirkung sicherzustellen und zu verbessern.

Diesem Stand der Technik gegenüber liegt der Erfindung die Aufgabe zugrunde, eine verbesserte Reinigungsvorrichtung mit Rückspüleinrichtung für Gasfilterelemente bei Staubgasfiltern zu konzipieren, die

a) ohne ein kontinuierlich umlaufendes Karussell mit einer Anzahl Düsen auskommt, die mittels einer Steuervorrichtung beim Vorbeilaufen an einem Elementenaustritt einen momentanen Druckstoss abgeben,

b) einen möglichst geringen Strömungswiderstand für die Druckluft hat und bei der

c) grosse Spülluftmengen zum Abreinigen der Filterelemente auf engem Raum erzeugt werden.

Diese Aufgabe wird mit der Erfindung dadurch gelöst, dass jedem Filterelement ein zweistufiger Injektor zugeordnet ist und die Einlaufdüse als zylindrischer Zentralinjektor mit über seine Länge konstantem Kreisquerschnitt ausgebildet ist.

Mit der Erfindung werden der bekannten Reinigungsvorrichtung mit zweistufigen Injektoren, von denen die erste Stufe kontinuierlich umlaufend ausgebildet ist, folgende vorteilhafte Wirkungen zugänglich gemacht:

1. eine höhere Spülleistung zum Reinigen der Filterelemente,

2. eine geringere Druckluftmenge und damit ein geringerer Energieverbrauch,

3. weniger Wartungs-, Instandhaltungs-, Instandsetzungs- und Reparaturarbeiten.

Weitere wesentliche Merkmale der Erfindung sind im folgenden aufgeführt:

Ein maximaler Volumenstrom mit hoher Austrittsgeschwindigkeit und somit eine höchstmögliche kinetische Energie im Austrittsstrahl der ersten Stufe wird dadurch erzielt bzw. erzeugt, dass der Injektor der ersten Stufe ein Austrittsrohr mit über seine Länge konstantem Querschnitt aufweist.

Um bei unterschiedlichen Filterelementen für die Grösse und Filterfläche eine optimale Druckerhöhung und einen bestmöglichen Volumendurchsatz zu erzielen, ist das Querschnittsverhältnis des zylindrischen Austrittsrohres der ersten Stufe zur zylindrischen Einlaufdüse der zweiten Stufe durch Auswechseln der zylindrischen Einlaufdüse veränderbar.

An Raum wird eingespart dadurch, dass die Einlaufdüse in das Filterelement integriert ist und an ihrem Einlauf einen nach aussen in den Reingasstrom gekrümmten Radius hat, mit dem sie am Stützkorb für das Filterelement auswechselbar befestigt ist.

Damit der aus den Filterelementen austretende Filterstrom über die zylindrische Mantelfläche zwischen erster und zweiter Stufe abgeführt wird und nicht die erste enge Stufe passieren muss, ist das Austrittsende der ersten Stufe im Abstand zum Eintrittsende der zweiten Stufe angeordnet.

Vorteilhaft beträgt der Abstand das Ein- bis Zweifache des Innendurchmessers des Austrittsrohres der ersten Stufe.

Die Erfindung ist in der Zeichnung an einem Ausführungsbeispiel veranschaulicht. Es zeigen:

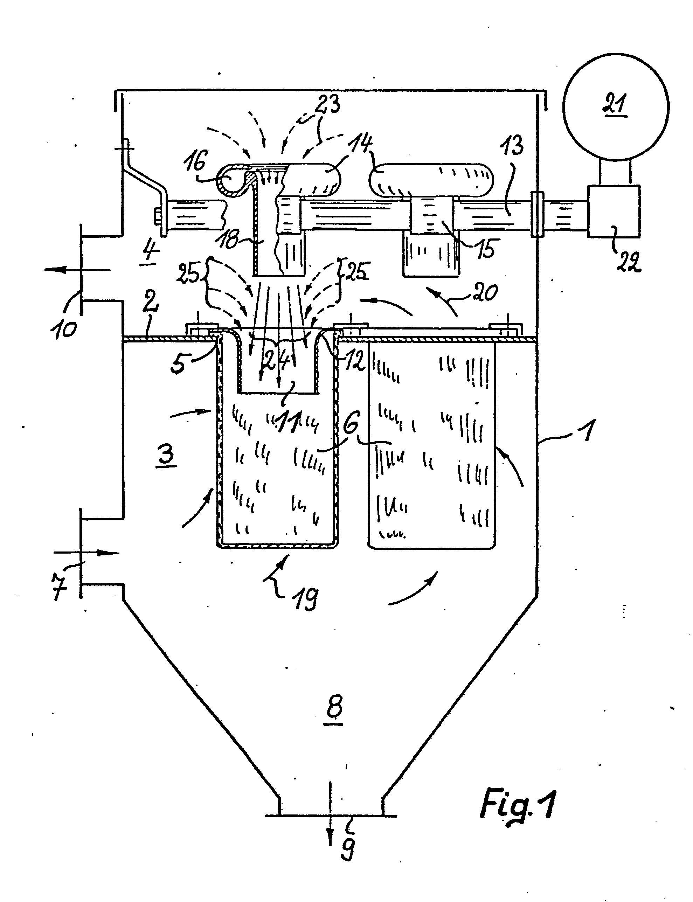

Fig. 1 die Vorrichtung von vorn im Längsschnitt und

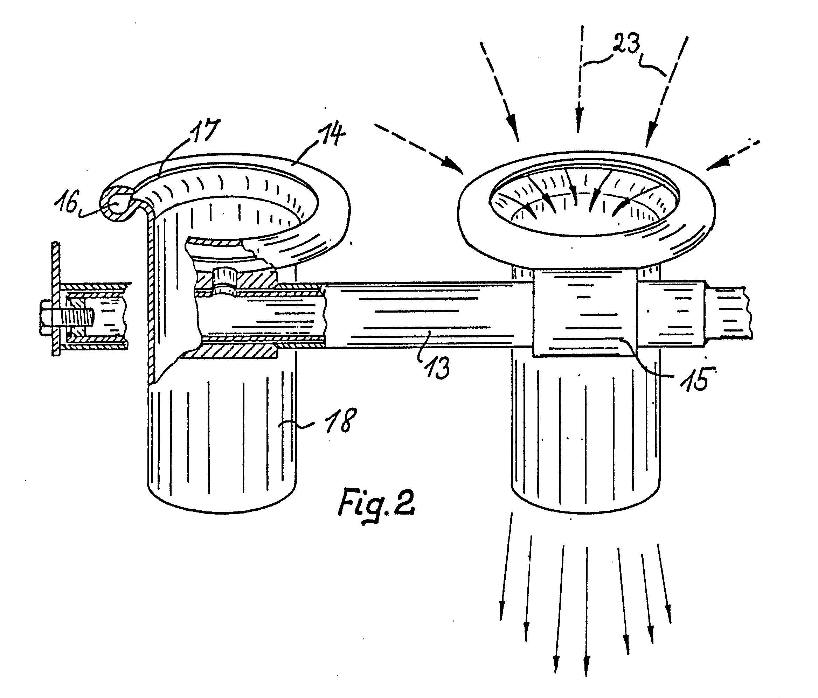

Fig. 2 die 1. Injektorstufe mit Druckluftzuführung.

Die Vorrichtung gemäss der Erfindung besteht aus einem Gehäuse 1, das durch einen Trennboden 2 in eine Rohgaskammer 3 und einen Reingasraum 4 getrennt ist. In dem Trennboden 2 sind soviel kreisförmige Öffnungen 5 vorgesehen wie Filterelemente 6 vorhanden sind.

Die Rohgaskammer 3 des Gehäuses 1 ist mit einem Rohgaseinlass 7 für das mit Staub beladene Rohgas und mit einem Staubaustrag 9 zum Abziehen des ausgefilterten Staubes versehen.

Der Reingasraum 4 hat einen Reingasauslass 10 für das Reingas. In die kreisförmigen Öffnungen 5 sind Filterelemente 6 eingehängt.

Koaxial zur Öffnung eines jeden Filterelementes 6 ist eine Einlaufdüse 11 vorgesehen. Jede Einlaufdüse 11 hat an ihrem Einlauf einen Radius 12, der mit der Krümmung nach aussen in den Reingasraum 4 weist.

Im Reingasraum 4 sind an der Druckluftzuführungsleitung 13 Ringspaltinjektoren 14 mit Anschlussmuffen 15 angebracht. Am Ringspaltinjektor 14 ist ein ringförmiger Kanal 16 angeordnet, der nach innen radial in einen Ringspalt mündet, der als «Coanda»-Düse bezeichnet wird. Dieser Spalt 17 ist kleiner als 1 mm und führt radial nach innen zu einem zylindrischen Austrittsrohr 18 des Ringspaltinjektors 14.

Die Vorrichtung gemäss der Erfindung arbeitet folgendermassen:

Das mit Staub beladene Rohgas 19 wird zur Trennung der Staubanteile vom Rohgas durch den Rohgaseinlass 7 in die Rohgaskammer 3 geführt, strömt dann die Filterelemente 6 von aussen an und tritt durch sie hindurch in sie hinein. Dabei bleiben vor allem die Staubanteile auf den Aussenseiten der Filterelemente 6 haften.

Das gereinigte Gas wird durch die zylindrischen Einlaufdüsen 11 in die Reingaskammer 4 und von dort aus über den Reingasauslass 10 ins Freie geführt. Die Filterelemente 6 werden in gewissen Intervallabständen von 50 bis 300 s durch Druckgas während des Filtrationsvorganges gereinigt. Hierzu wird das Druckgas in umgekehrter Richtung zur Strömungsrichtung des Reingases 20 gleichzeitig in die Filterelemente 6 einer Reihe eingeblasen.

Das für die Reinigung erforderliche Druckgas wird von einem nicht weiter dargestellten Druckgasverdichter erzeugt und dem Druckgasbehälter 21 zugeführt. Im Druckgasbehälter 21 steht ein Druck von 6 bar an. Durch Öffnen der einer zu reinigenden Reihe von Filterelementen 6 zugehörigen magnetgesteuerten Membranventile 22 wird dann für den Bruchteil einer Sekunde ein Druckgasstoss über die in Reihe geschalteten Ringspaltinjektoren 14 in die Injektorrohre 18 gegeben.

Die Druckgasströmung tritt über die «Coanda»-Ringspaltdüsen 14 in die Austrittsrohre 18 der 1. Injektorstufe ein und reisst Sekundärgas 23 in die 1. Injektorstufe. Die gesamte aus Primär- und Sekundärspülgasmenge bestehende Spülgasmenge 24 wird über die Einlaufdüse 11 schlagartig in die Filterelemente 6 gedrückt und reisst zusätzlich eine zweite Sekundärluftmenge 25 schlagartig in die Filterelemente 6. Hier wird ein für die Reinigung der Filterelemente 6 entsprechender Druck aufgebaut.

Die Reinigung mittels Druckgas bewirkt hierbei die drei folgenden Funktionen:

1. Die normale Filtrationsströmung wird kurzzeitig unterbochen,
2. das Filterelement 6 wird durch den Druckgasstrom 24 in Gegenstromrichtung schlagartig aufgeblasen und
3. die auf dem Filtermaterial abgelagerte Staubschicht wird durch den primären Druckgasstrom und die zusätzlich zweifach eingezogenen Sekundärspülgasströme 23 und 25 abgeblasen.

Die von den Filterelementen 6 auf diese Weise abgeworfene Staubschicht wird im Staubsammelbunker 8 gesammelt und von dort aus über den Austrag 9 abgeführt. Nach Schliessen der magnetgesteuerten Membranventile 22 tritt für die gereinigten Filterelemente 6 wieder die normale Filtrierströmung ein.

## Patentansprüche

1. Reinigungsvorrichtung mit Rückspüleinrichtung für Gasfilterelemente von Staubgasfiltern, wie Filterschläuche, Filtertaschen oder Filterzellen, bei der Filterelementen (6) zum Abreinigen mit Hilfe von Spülgasstössen, die in das Filterelement im Gegenstrom eingeblasen werden, zweistufige Injektoren zum Ansaugen von Reingas in zwei Stufen zugeordnet sind, von denen die eine als Coanda-Ringspaltinjektor (14) und die andere als Einlaufdüse (11) ausgebildet ist, dadurch gekennzeichnet, dass jedem Filterelement (6) ein zweistufiger Injektor zugeordnet ist und die Einlaufdüse (11) als zylindrischer Zentralinjektor mit über seine Länge konstantem Kreisquerschnitt ausgebildet ist.

2. Vorrichtung nach Anspruch 1, dadurch gekennzeichnet, dass der Injektor der ersten Stufe ein Austrittsrohr (18) mit über seine Länge konstantem Kreisquerschnitt aufweist.

3. Vorrichtung nach Anspruch 1 oder 2, dadurch gekennzeichnet, dass das Querschnittsverhältnis des zylindrischen Austrittsrohres (18) der ersten Stufe zur zylindrischen Einlaufdüse (11) der zweiten Stufe durch Auswechseln der zylindrischen Einlaufdüse (11) veränderbar ist.

4. Vorrichtung nach Anspruch 1, 2 oder 3, dadurch gekennzeichnet, dass die Einlaufdüse (11) in das Filterelement (6) integriert ist und an ihrem Einlauf einen nach aussen in den Reingasraum (4) gekrümmten Radius (12) hat, mit dem sie am Stützkorb des Filterelementes (6) auswechselbar befestigt ist.

5. Vorrichtung nach einem oder mehreren der Ansprüche 1 bis 4, dadurch gekennzeichnet, dass das Austrittsende der ersten Stufe im Abstand zum Eintrittsende der zweiten Stufe angeordnet ist.

6. Vorrichtung nach Anspruch 5, dadurch gekennzeichnet, dass der Abstand das Ein- bis Zweifache des Innendurchmessers des Austrittsrohres (18) der ersten Stufe beträgt.

## Claims

1. Purification device with backwash attachment for gas filter elements of dust gas filters, such as filter hoses, filter pockets or filter cells, in which two-stage injectors for suctioning pure gas are associated in two stages with filter elements (6) for blowing-off with the aid of rinsing gas blasts blown counter-current into the filter element, one of the injectors being a Coanda annular gap injector (14) and the other an inlet nozzle (11), characterised in that a two-stage injector is associated with each filter element (6) and the inlet nozzle (11) is designed as a cylindrical central injector having a constant circular cross-section over its length.

2. Device according to Claim 1, characterised in that the injector of the first stage has an outlet tube (18) of constant circular cross-section over its length.

3. Device according to Claim 1 or 2, characterised in that the cross-section ratio of the cylindrical outlet tube (18) of the first stage to the cylindrical inlet nozzle (11) of the second stage can be altered by changing the cylindrical inlet nozzle (11).

4. Device according to Claims 1, 2 or 3, characterised in that the inlet nozzle (11) is integral with the filter element (6) and at its inlet has a radius (12) curved outwardly into the pure gas space (4), with which the nozzle can be interchangeably secured to the supporting cage of the filter element (6).

5. Device according to one or more of Claims 1 to 4, characterised in that the outlet end of the first stage is arranged at a distance from the inlet end of the second stage.

6. Device according to Claim 5, characterised in that the distance is once to twice the internal diameter of the outlet tube (18) of the first stage.

## Revendications

1. Dispositif de nettoyage muni d'un dispositif de balayage à contre-courant pour des éléments de filtrage de filtres à poussière, notamment des tuyaux de filtrage, poches de filtrage ou cellules filtrantes, dispositif dans lequel des injecteurs à deux étages dont un est réalisé en tant qu'injecteur (14) à fente annulaire de Coanda et l'autre en tant que buse de guidage (11), aspirant du gaz pur en deux étapes coopèrent avec les éléments de filtrage (6) pour les nettoyer à l'aide de poussées de gaz de balayage insufflées à contre-courant dans les éléments de filtrage, caractérisé en ce qu'un injecteur à deux étages est associé à chaque élément de filtrage (6) et en ce que la buse de guidage (11) est réalisée en tant qu'injecteur central cylindrique présentant une section circulaire constante sur sa longueur.

2. Dispositif selon la revendication 1, caractérisé en ce que l'injecteur du premier étage comporte un tuyau de sortie (18) présentant une section circulaire constante sur sa longueur.

3. Dispositif selon la revendication 1 ou 2, caractérisé en ce que la proportion de section transversale du tuyau de sortie cylindrique (18) du premier étage par rapport à la buse de guidage cylindrique (11) du deuxième étage peut être modifiée en changeant la buse de guidage cylindrique (11).

4. Dispositif selon les revendications 1, 2 ou 3, caractérisé en ce que la buse de guidage (11) est incluse dans l'élément de filtrage (6) et en ce qu'elle présente à son entrée une courbure (12) orientée vers l'extérieur et dirigée vers l'enceinte de gaz pur (4), courbure lui permettant d'être fixée à la portée d'appui des éléments de filtrage (6) de façon à pouvoir être changée.

5. Dispositif selon l'une ou plusieurs des revendications 1 à 4, caractérisé en ce que l'extrémité de sortie du premier étage est montée à distance de l'extrémité d'entrée du deuxième étage.

6. Dispositif selon la revendication 5, caractérisé en ce que la distance est le simple ou le double du diamètre intérieur du tuyau de sortie (18) du premier étage.

Fig.1

*Fig.2*

0 034 645